(19) **Europäisches Patentamt / European Patent Office / Office européen des brevets**

(11) **EP 3 096 267 A1**

(12) **EUROPEAN PATENT APPLICATION**

(43) Date of publication:
**23.11.2016 Bulletin 2016/47**

(51) Int Cl.:
**G06K 9/62** *(2006.01)*   **G06F 17/30** *(2006.01)*

(21) Application number: **15305747.6**

(22) Date of filing: **19.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
- **Thebault, Cédric**
  **35576 Cesson-Sévigné (FR)**
- **Lefebvre, Frédéric**
  **35576 Cesson-Sévigné (FR)**
- **Vigouroux, Jean-Ronan**
  **35576 Cesson-Sévigné (FR)**

(74) Representative: **Perrot, Sébastien**
**TECHNICOLOR**
**1-5, rue Jeanne d'Arc**
**92130 Issy-les-Moulineaux (FR)**

(54) **METHOD AND DEVICE FOR PAIRWISE MATCHING OF FEATURES**

(57)  A method for pairwise matching features between two pieces of content is disclosed. It builds upon the idea that the best backward matching pairs generally belong to the k best forward matching pairs. Consequently, the pairwise matching method between a first set of features in a first piece of content and a second set of features in a second piece of content comprises a first step of forward matching resulting in forward matched pairs, wherein for each feature of the first set of features, a plurality of candidate forward matched pairs are selected, and a second step of backward matching applied in said plurality of candidate forward matched pairs for rejecting the forward matched pairs that do not belong to backward matched pairs.

Figure 1

EP 3 096 267 A1

**Description**

1. TECHNICAL FIELD

In the following, a method for pairwise matching of features in two pieces of content is disclosed. Such method is useful when features need to be tracked between different pieces of content (images, audio sequence, ...). For example in content based image retrieval systems where queries are generated for finding images similar to another image in large databases, features are extracted from the images and need to be matched between images as an initial step for determining image similarities. Another example is motion prediction between different images of a same sequence. Features are also extracted from different images and need to be matched across images as an initial step of motion predictions. Corresponding device is also disclosed.

2. BACKGROUND ART

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Pairwise matching is an initial step in feature matching between two pieces of content, for example two images, resulting in pairs of features where a feature of a first image is matched to a feature of a second image. Pairwise matching is generally followed by a step of geometrical verification where a model of distortion (such as homographic or affine) between the two images is estimated. Prior to matching, features are extracted in the images using for instance Scale Invariant Feature Transforms (SIFT), and these features get described using for instance SIFT descriptors. A SIFT descriptor is a vector of dimension 128, which may be reduced to 64 if Principal Component Analysis is applied. Prior art methods are known for pairwise matching, comprising descriptor distance computations, generally based on Euclidean distance, between the descriptors of two images, and comparisons between those distances to determine the best (the minimum) computed distance. More precisely, known pairwise feature matching methods generally comprise a first step of forward matching wherein for each feature descriptor in a first image the best corresponding feature descriptor in the second image is determined. Some other known prior art methods also comprise a second step of backward matching wherein feature matches with low confidence, or without a clear matching are rejected. Indeed pairwise matching aims at identifying a set of matched pairs of a certain level of confidence, that are further used in other steps, of feature matching for determining whether the two pieces of content match. Prior art forward feature matching methods use a brute force approach : each feature descriptor of the first image is evaluated against each feature descriptor of the second image resulting in $n^2$ distance computations and $n^2$ comparisons (considering each image comprises n feature descriptors). Prior art backward matching methods also use a brute force approach : each feature descriptor of the second image is evaluated against each feature descriptor of the first image resulting in $n^2$ distance computations and $n^2$ comparisons again. Such known backward matching method is used to reject the feature matches obtained during the forward matching that are not obtained in the backward matching. In other words if the feature $F_i$ in image A is forward matched with feature $G_j$ in image B (meaning that in image B, $G_j$ is the feature with the closest descriptor), then $F_i$ is only kept if in image A, $F_i$ is the best match for $G_j$. Since prior art methods use a brute force approach for both the forward and backward matching, the computation effort for pairwise matching may be extremely important as the number of features and / or the dimension of the feature descriptors increase. Some other approaches are desired to perform feature matching when the number of features and / or the feature descriptor dimension increase, or when the processing resources performing the feature matching are limited.

3. SUMMARY

Building upon the fact that the best backward matching pairs generally belong to the k best forward matching pairs, a salient idea is to include in the forward matching between two sets of features, resulting in forward matched pairs, a step of selecting a plurality of candidate forward matched pairs is selected. A backward matching is then applied in said plurality of candidate forward matched pairs for rejecting the forward matched pairs that do not belong to backward matched pairs.

To this end a method for pairwise matching a first set of features to a second set of features is disclosed. It comprises a forward matching the first set of features to the second set of features resulting in forward matched pairs. A forward matched pair comprises a first feature $A_i$ in the first set of features and a forward matched feature $B_j$ in the second set of features. The forward matching further comprises selecting a plurality of candidate forward matched pairs and the pairwise matching method further comprises a backward matching applied in said plurality of candidate forward matched pairs resulting in backward matched pairs. The pairwise matching method further comprises obtaining matched pairs by selecting the pairs belonging to both forward matched pairs and backward matched pairs.

According to a preferred embodiment a feature is further characterized by a descriptor, comprising a plurality of values, representing said feature in a descriptor space. A forward matched pair is obtained by selecting the forward matched feature $B_j$ in the second set of features, as the feature with the smallest distance in the descriptor space, to the first feature $A_i$ in the forward matched pair. A backward matched pair comprising a second feature $B_p$ in the second set of features and a backward matched feature Aq in the first set of features, is obtained by selecting the backward matched feature Aq having the smallest distance in the descriptor space to the second feature $B_p$ in the backward matched pair, among other candidate forward matched pairs having the same said second feature $B_p$.

According to a particularly advantageous variant the pairwise matching method further comprises storing distances between the features of the first set of features and the features of the second set of features, wherein the distances are obtained in the descriptor space during the forward matching.

According to another particularly advantageous variant a candidate forward matched pair of the plurality of candidate forward matched pairs comprising a first candidate feature in the first set $A_{ci}$ of features, and a candidate forward matched feature $B_{cj}$ in the second set of features, is further selected when the distance between the candidate forward matched feature $B_{cj}$ and the first candidate feature $A_{ci}$ in the descriptor space belongs to the k smallest distances among the distances between the first candidate feature $A_{ci}$ and any feature $B_j$ of the second set in the descriptor space, where k is an integer greater than two and smaller than six.

According to another particularly advantageous variant a candidate forward matched pair of the plurality of candidate forward matched pairs comprising a first candidate feature $A_{ci}$ in the first set of features, and a candidate forward matched feature $B_{cj}$ in the second set of features, is further selected when the distance between the candidate forward matched feature $B_{cj}$ and the first candidate feature $A_{ci}$ in the descriptor space is smaller than a first value.

According to another particularly advantageous variant, obtaining matched pairs further comprises selecting a backward matched pair in the case where the ratio between the distance, in the descriptor space, of its backward matched feature to its first feature and the distance of its second best backward matched feature to its first feature, is smaller than a second value.

In a second aspect, a device for pairwise matching a first set of features to a second set of features is also disclosed. It comprises a processor configured to forward match the first set of features to the second set of features resulting in forward matched pairs. A forward matched pair comprises a first feature $A_i$ in the first set of features and a forward matched feature $B_j$ in the second set of features. The processor is further configured to select a plurality of candidate forward matched pairs. The processor is further configured to apply a backward matching in the plurality of candidate forward matched pairs resulting in backward matched pairs. The processor is further configured to obtain matched pairs by selecting the pairs belonging to both forward matched pairs and backward matched pairs.

According to a particularly advantageous variant the processor is further configured to store distances between the features of the first set of features and the features of the second set of features, wherein the distances are obtained in the descriptor space during the forward matching.

According to another particularly advantageous variant, the processor configured to obtain matched pairs is further configured to select a backward matched pair in the case where the ratio between the distance, in the descriptor space, of its backward matched feature to its first feature and the distance of its second best backward matched feature to its first feature, is smaller than a second value.

In a third aspect, a computer program for pairwise matching a first set of features to a second set of features is also disclosed. The computer program comprises program code instructions executable by a processor for:

- forward matching the first set of features to the second set of features resulting in forward matched pairs wherein a forward matched pair comprises a first feature $A_i$ in the first set of features and a forward matched feature $B_j$ in the second set of features, wherein the forward matching further comprises selecting a plurality of candidate forward matched pairs;
- applying a backward matching in the plurality of candidate forward matched pairs resulting in backward matched pairs;
- obtaining matched pairs by selecting the pairs belonging to both forward matched pairs and backward matched pairs.

In a fourth aspect, a computer program product for pairwise matching a first set of features to a second set of features is also disclosed. The computer program product is stored on a non-transitory computer readable medium, and comprises program code instructions executable by a processor for:

- forward matching the first set of features to the second set of features resulting in forward matched pairs wherein a forward matched pair comprises a first feature $A_i$ in the first set of features and a forward matched feature $B_j$ in the second set of features, wherein the forward matching further comprises selecting a plurality of candidate forward matched pairs;

- applying a backward matching in the plurality of candidate forward matched pairs resulting in backward matched pairs;
- obtaining matched pairs by selecting the pairs belonging to both forward matched pairs and backward matched pairs.

While not explicitly described, the present embodiments may be employed in any combination or sub-combination. For example, the disclosed method, device, or computer program are not limited to the described characteristics of the forward matching, backward matching and test ratio methods.

Besides, any characteristic or variant described for the pairwise patching method is compatible with a device intended to process the disclosed method, with a computer-readable storage medium storing program instructions, and with a computer program product.

4. BRIEF DESCRIPTION OF THE DRAWINGS

In the drawings, an embodiment of the present invention is illustrated. It shows:

- **Figure 1** illustrates the method for pairwise matching according to a preferred embodiment;
- **Figure 2** illustrates a device implementing the method according to a particular embodiment;
- **Figure 3** illustrates a benchmark of the pairwise matching method in case of a positive matching according to a particular embodiment;
- **Figure 4** illustrates a benchmark of the pairwise matching method in case of a negative matching according to a particular embodiment.

5. DESCRIPTION OF EMBODIMENTS

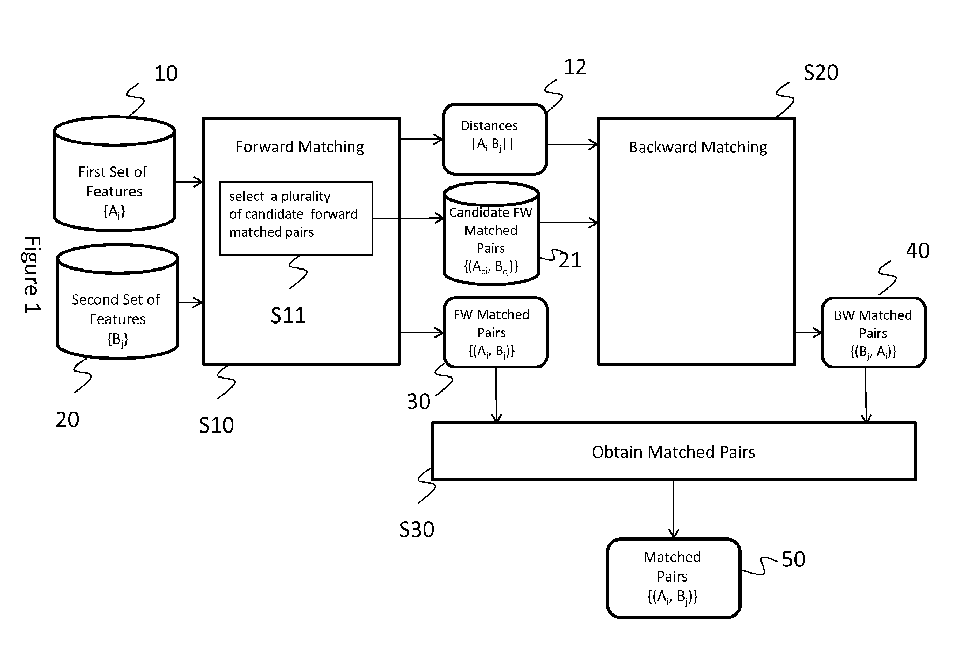

**Figure 1** illustrates the method for pairwise matching according to a preferred embodiment. In this embodiment the method for pairwise matching a first set 10 of features $\{A_i, i \in [1,n]\}$ to a second set 20 of features $\{B_j, j \in [1,n]\}$ comprises a step S10 of forward matching from the first set 10 of features to the second set 20 of features resulting in forward matched pairs 30. The forward matching step further comprises selecting a plurality of candidate forward matched pairs 21. The pairwise matching method comprises a step S20 of backward matching that is advantageously applied from the plurality of candidate forward matched pairs 21, resulting in backward matched pairs 40. The pairwise matching method further comprises a step S30 of obtaining matched pairs 50 by selecting the pairs belonging to both forward matched pairs 30 and backward matched pairs 40. Advantageously the plurality of candidate forward matched pairs 21 is only a subset of the set of all the possible pairs formed by a feature of the first set 10 and a feature of the second set 20. Applying the backward matching step S20 on this subset therefore allows reducing the computing effort of the backward matching compared to prior art exhaustive methods.

A feature is characterized by a location in a piece of content, that depends on the type of content and a descriptor comprising a plurality of values. The location is for example the set of spatial coordinates in case the piece of content is a still picture. In another example a feature location is a play time value in case of an audio sequence. The feature descriptor is a vector further characterizing the feature by carrying additional information. The feature descriptors are used for instance to evaluate the similarity between features. The Euclidean distance ($L_2$ norm) is generally used between two descriptors in the feature space, also called the descriptor space, to evaluate their similarity : the smaller the distance, the more similar are the features. Any other type of distance (eg. $L_1$, $L_3$, $L_n$) is compatible with the pairwise matching method.

In this particular embodiment, a set of features is comprised in a piece of content wherein in a first variant a piece of content is a still picture. As such the piece of content comprises a set of features, each one being characterized by a location in the still picture (i.e. its spatial coordinates in a two dimension space), and a feature descriptor (i.e. a vector comprising a plurality of values further characterizing the feature in the descriptor space, where the dimension of the descriptor space is equal to the number of values of the vector). In a second variant, the piece of content is a spatial subpart of a still picture, for instance the top right quarter, or any other quarter, or any other kind of subdivision. In this variant the set of features is extracted from this still picture spatial subpart. In a third variant the piece of content is a resolution subpart of a still picture. If for instance the still picture is a full HD frame (resolution 1920x1080, representing 1080 lines and 1920 columns), a piece of content, being a subpart of the full resolution still picture is a SD resolution of it, comprising only 575 lines. In another example a piece of content is a HD resolution of the full resolution still picture, comprising only 720 lines. In another variant a piece of content is a spatial and resolution subpart of a still picture. For certain applications it may be advantageous to extract a set of features from a still picture as a spatial or resolution subpart of it. In yet another variant a piece of content is a 3D scene representation, and features extracted from a piece of content are located by three coordinates in a three dimensional space. Any variant for a piece of content described above as a spatial or resolution subpart of a still picture is also applicable for a 3D scene representation.

More generally features characterized by a first vector, called a location vector comprising a first plurality of values, and determining the location of a feature in a first space (which dimension can be any dimension, and also higher than three), and a second vector, called feature descriptor vector in a second space, called descriptor space, also comprising another plurality of values, is compatible with the pairwise matching method. Any type of features used for characterizing any type of data (audio, video, still pictures, text...) is compatible with the pairwise matching of features.

In the step S10 of forward matching, from a first set of features 10 to a second set of features 20, distances are computed in the descriptor space, using a distance metric, for instance the Euclidean distance, between the descriptor of any feature of the first set 10 and the descriptor of any feature of the second set 20. If we assume that each of the feature sets 10, 20 comprises $n$ features, this results in $n^2$ distance computations. For each feature $A_i$ (where $i \in [1, n]$) in the first set 10, the distances $\|A_iB_j\|$ are computed between the descriptor of $A_i$ and the descriptor of any feature $\{B_j, \forall j \in [1, n]\}$ of the second set 20. The features $\{B_j\}$ are ordered according to the distances $\|A_iB_j\|$. The feature $B_m$ of the second set 20, which descriptor has the smallest distance $\|A_iB_m\|$ to the descriptor of the feature $A_i$ of the first set 10, is selected as the forward matched feature for that feature, resulting in a forward matched pair $(A_i, B_m)$. Forward matched pairs 30 $\{(A_i, B_j)\}$ are obtained by applying the same method to all the features of the first set 10 $\{A_i, \forall i \in [1, n]\}$.

In a variant, the computed distances $\|A_iB_j\|$ between the feature descriptors of both sets 10,20 of features are stored in a repository 12, for being reused in the backward matching step S20, without needing to compute the distances again. A repository 12 is implemented for instance by a hard disk drive, a flash memory, a RAM, or a SSD for storing the computed distances.

In the sub-step S11 of the forward matching step S10, for each feature $A_{ci}$ (with $ci \in [1, n]$) in the first set 10, where $A_{ci}$ is called a first candidate feature, a plurality of candidate forward matched features $\{B_{cj}\}$ are selected from the second set 20 of features by evaluating the $\|A_{ci}B_{cj}\|$ distances between their descriptors, resulting in a plurality of candidate forward matched pairs 21 $\{(A_{ci}B_{cj})\}$. In a first variant, called the "top k" variant, for a given first candidate feature, a plurality of candidate forward matched pairs $\{(A_{ci}B_{cj})\}$ are selected when the distance ($\|A_{ci}B_{cj}\|$) between the candidate forward matched feature $B_{cj}$ and the first candidate feature $A_{ci}$ in the descriptor space belongs to the k smallest distances among the distances ($\|A_{ci}B_j\|$) between the first candidate feature $A_{ci}$ and any feature $B_j$ of the second set 20 in the descriptor space, where k is an integer greater than two and strictly smaller than the number of features of the second set 20 ($2 \leq k < n$). For example, for a given first candidate feature $A_{ci}$ of the first set 10, the features $\{B_j\}$ of the second set 20 are ordered according to their distance ($\|A_{ci}B_{cj}\|$) to the first candidate feature $A_{ci}$ in an increasing order. A plurality of candidate forward matched pairs for that given first candidate feature $A_{ci}$ comprises the top k features of the obtained ordered set. The plurality of candidate forward matched pairs 21 are obtained by applying the same method to all features $A_{ci}$ (where $ci \in [1, n]$) of the first set 10.

In a second variant, for a given first candidate feature $A_{ci}$ of the first set 10, a plurality of candidate forward matched features are selected when they are at a distance to the first candidate feature of the first set 10, in the descriptor space, smaller than a first value $\varepsilon$. This results in a plurality of candidate forward matched pairs $\{(A_{ci}B_{cj})\}$ for a given first candidate feature $A_{ci}$. In this variant also a plurality of candidate forward matched pairs 21 $\{(A_{ci}B_{cj})\}$ are obtained by applying the same method to all features $A_{ci}$ (where $ci \in [1, n]$) of the first set 10. More formally, for any feature $A_{ci}$ in the first set 10, the plurality of candidate forward matched pairs 21 is the set:

$$\left\{(A_{ci}B_{cj}): ci \in [1, n], \ cj \in [1, n], \ \left\|A_{ci}B_{cj}\right\| \leq \varepsilon\right\}.$$

In another variant a plurality of candidate forward matched pairs 21 are selected according to the first variant, and according to the second variant. More precisely, for a given first candidate feature $A_{ci}$ of the first set 10 a plurality of candidate forward matched features $\{B_{cj}\}$ are selected as being the $k$ features $B_{cj}$ such that the $\|A_{ci}B_{cj}\|$ distances between their feature descriptors are the $k$ smallest distances among all the $\|A_{ci}B_j\|$ distances, $\forall j \in [1, n]$, _**and**_ such that the $\|A_{ci}B_{cj}\|$ distances between their feature descriptors are smaller than a first value $\varepsilon$.

In yet another variant a plurality of candidate forward matched pairs 21 are selected if they belong to the candidate forward matched pairs selected according to the first variant (the top k) or if they belong to the candidate forward matched pairs selected according to the second variant (distance less than $\varepsilon$). More precisely, for a given first candidate feature $A_{ci}$ of the first set 10 a plurality of candidate forward matched features $\{B_{cj}\}$ are selected as either belonging to the $k$ features $B_{cj}$ such that the $\|A_{ci}B_{cj}\|$ distances between their feature descriptors are the $k$ smallest distances among all the $\|A_{ci}B_j\|$ distances, $\forall j \in [1, n]$, _**or**_ such that the $\|A_{ci}B_{cj}\|$ distances between their feature descriptors are smaller than a first value $\varepsilon$.

Advantageously, in any of the variants described above, only the distances corresponding to the plurality of candidate forward matched pairs 21 are stored in the repository 12, for a later use.

In the step S20, backward matching is applied from the plurality of candidate forward matched pairs 21. As described above a candidate forward matched pair $(A_{ci}, B_{cj})$ comprises a first candidate feature $A_{ci}$ and a candidate matched feature $B_{cj}$. In this step S20 of backward matching, distances between the descriptors of the first candidate feature and the candidate forward matched feature of each forward matched pair are computed in the descriptor space, using a distance metric, for instance the Euclidean distance. Advantageously these distances are retrieved from the repository 12 without re-computing them. For each feature $B_{cj}$, that belongs to at least one candidate forward matched pair of the plurality of candidate forward matched pairs 21, the candidate forward matched pairs comprising $B_{cj}$, as a candidate forward matched feature, are ordered according to the distances $\|A_{ci}B_{cj}\|$ between their descriptors. The first candidate feature $A_{cm}$, which descriptor has the smallest distance $\|A_{cm}B_{cj}\|$ to the descriptor of the feature $B_{cj}$ among the candidate forward matched pairs comprising $B_{cj}$, is selected as the backward matched feature $A_{cm}$ for that feature $B_{cj}$, resulting in a backward matched pair $(A_{cm},B_{cj})$. The set of backward matched pairs 40 $\{(A_i,B_j)\}$ is obtained by applying the same method to all the features $B_{cj}$ that belong to at least one candidate forward matched pair of the plurality of candidate forward matched pairs 21.

The backward matching step S20 disclosed here is advantageous compared to the prior art, in the sense that it is applied in a smaller set than the prior art methods. Indeed, prior art exhaustive backward matching methods examine all possible pairs between the first set and the second set resulting in a number of $n^2$ pairs. In the disclosed backward matching step S20, the number of pairs being considered for the backward matching is reduced to a number smaller than n*k, if we consider to *top k* variant described above. Indeed for each feature of the first set 10, a plurality of k candidate forward matched pairs are selected, resulting in a total number of candidate forward matched pairs smaller than or equal to n*k.

In the step S30, matched pairs 50 are obtained by selecting the pairs belonging to both forward matched pairs 30 and backward matched pairs 40. In other words, the pairs belonging to the forward matched pairs, but not to the backward matched pairs represent pairs for which the matching is of low confidence, and are not selected for being part of the matched pairs 50. Such pairs $(A_i,B_j)$, that are not selected in the step S30, correspond to pairs for which there is no clear match between $A_i$ and $B_j$: from the perspective of $A_i$, $B_j$ is the closest feature ($\forall j \in [1, n]$) to $A_i$ but from the perspective of $B_j$, there is another feature closer to $B_j$ than $A_i$. More formally :

$$\exists j \in [1, n], \forall q \in [1, n] : \left\| A_i B_j \right\| \leq \left\| A_i B_q \right\|$$

($B_j$ is the closest feature to $A_i$)

$$\text{But } \exists p \in [1, n] : \left\| A_p B_j \right\| < \left\| A_i B_j \right\|$$

($A_i$ is not the closest feature to $B_j$).

This means that there is no clear match between $A_i$ and $B_j$, and the pair is not selected as belonging to the matched pairs 50. As mentioned above, the pairwise matching method disclosed here is advantageous compared to the prior art, because its backward matching is applied in a plurality of candidate forward matched pairs, being of a smaller size than prior art methods.

Advantageously the step S30 further comprises a ratio test wherein the ratio test is evaluated in the plurality of candidate forward matched pairs 21. More precisely and for each pair $(B_j, A_i)$ of the backward matched pairs 40, the ratio test comprises computing the ratio of on the one hand, the distance from its backward matched feature $(A_i)$ descriptor to its first feature $(B_j)$ descriptor, and on the other hand the distance from its second best backward matched feature $(A_r)$ descriptor to the same first feature $(B_j)$ descriptor among the plurality of candidate forward matched pairs 21. More formally :

Let $(B_j, A_i)$ be one pair of the backward matched pairs 40. $A_i$ is thus the closest feature to $B_j$ within the first set 10 such that $(B_j, A_i)$ belongs to the plurality of candidate forward matched pairs 21. Let $A_r$ be the second closest feature to $B_j$ such that $(A_r,B_j)$ belongs to the plurality of candidate forward matched pairs 21. As already mentioned, closeness between features is evaluated by distance computation between their descriptor in the descriptor space. If there is no second closest feature $A_r$ to $B_j$ such that $(A_r,B_j)$ belongs to the plurality of candidate forward matched pairs 21, the ratio test succeeds and the unique candidate forward matched pair comprising Bj is selected as a backward matched pair. Otherwise the ratio computed in the ratio test is defined as $ratio = \dfrac{\left\| B_j A_i \right\|}{\left\| B_j A_r \right\|}$

The ratio test comprises selecting a backward matched pair in the case where the computed *ratio* is smaller than a second value. The ratio test is another type of test allowing to reject feature matches of low confidence. A ratio test may be applied both in the forward matching and / or in the backward matching : a matched feature being too close

**EP 3 096 267 A1**

to the second best match feature, and revealed by the ratio test is an indication of low confidence of the match pair. Here applying the ratio test as part of the backward matching, among the plurality of candidate matched pairs 21 instead of among all possible pairs of features between the first set 10 and the second set 20 is advantageous as it reduces the amount of computing effort.

Advantageously the parameters of the different variants (k, for the top k best candidates, or ε defining the proximity threshold for the candidate forward matched features) are adjusted depending on application requirements. There is a tradeoff between the computing resources required to perform the pairwise matching, and the accuracy of the method. High values of k imply a high accuracy of the pairwise matching, but require significant computing resources. Decreasing k allows to use less computing resources for the pairwise matching, but with a loss of accuracy. Similarly increasing ε allows to use less computing resources for the pairwise matching, also with a loss of accuracy.

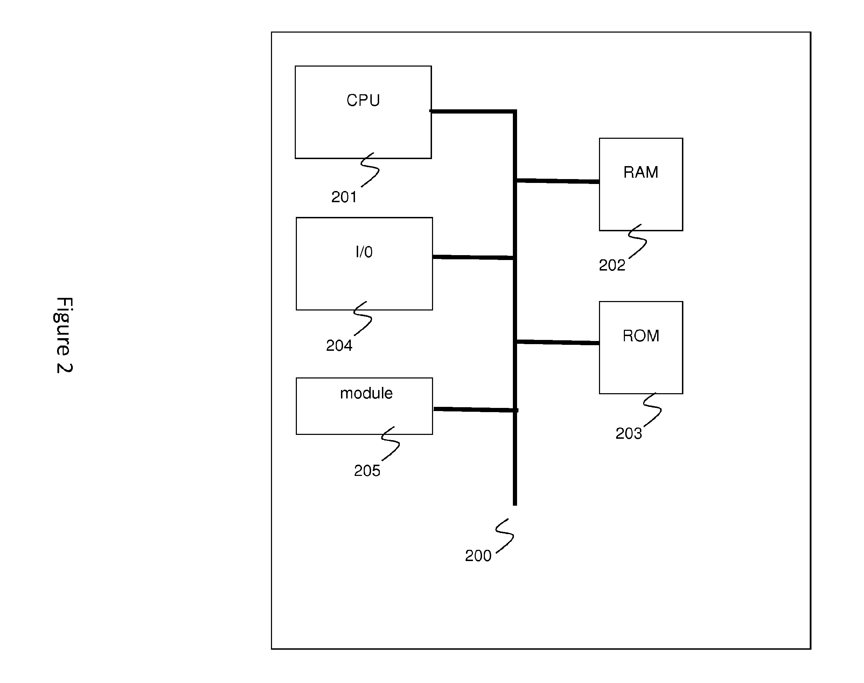

**Figure 2** illustrates a hardware embodiment of a device 200 adapted to implement the steps of the pairwise matching method. The skilled person will also appreciate that the method can be implemented quite easily without the need for special equipment by devices such as PCs. According to different variants, features described for the method are being implemented in software module or in hardware module 205. The device 200 comprises physical means intended to implement an embodiment of the invention, for instance a processor 201 (CPU), a data memory 202 (RAM or HDD), a program memory 203 (ROM), one of several inputs/outputs 204 (I/O). When powered up, the microprocessor 201 loads and runs the instructions of the pairwise matching algorithm comprised in RAM 202, and the microprocessor 201 is configured to control functional modules. The memory RAM 202 further comprises the first set and the second set of features to be pairwise matched, associated with their descriptor vectors. A baseline pairwise matching device 200 comprises an processing module 205 able to perform pairwise matching algorithm to match features.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

Naturally, the invention is not limited to the embodiments and characteristics previously described. In particular, the invention is compatible with any pairwise matching scheme.

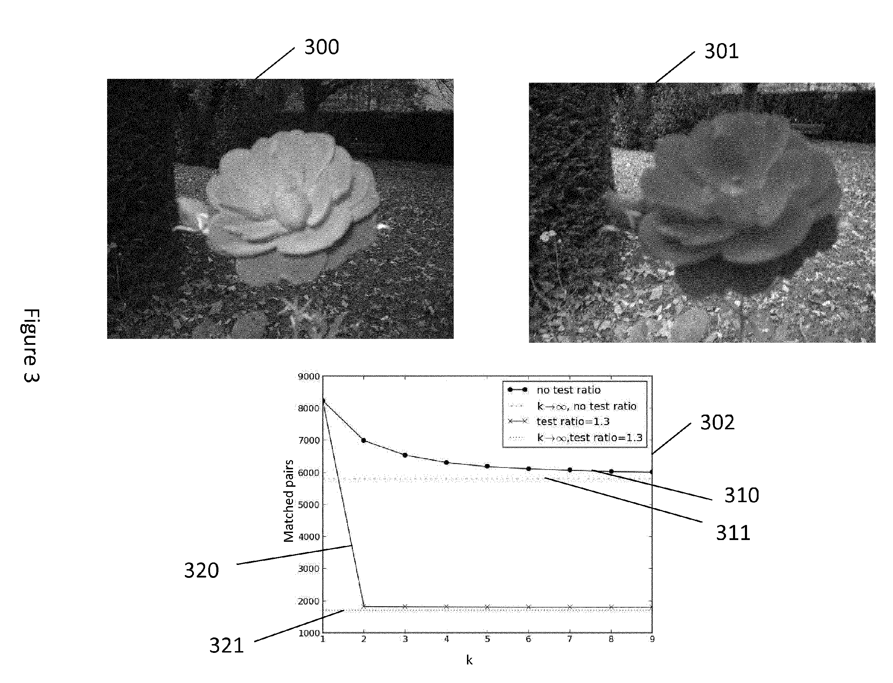

Figure 3 illustrates a benchmark of the benefit of the pairwise matching "top k" variant method between two images 300 and 301 in case of a *positive* matching. Indeed, the two images 300 and 301 are called *positive* matching as they are images of a same flower and expected to be detected as similar by a content based retrieval system. Each of the image 300 and 301 comprises fifteen thousand features. A stated before, a pairwise matching is an initial step of a feature matching between two images, and aims at reducing the number of pairs, on which further computations are performed, such as for example geometric verification. Forward S10 and backward S20 matching can be seen as filtering steps aiming at obtaining a suitable set of a reasonable size on which to perform further processing. They may not be self-sufficient steps for assessing of a positive or a negative match between the two pieces of content. However they aim at determining the set of matched pairs on which further verifications (such as geometric verifications) will be performed. A diagram 302 represents a set of plots 310, 311, 320, 321 where the number of matched pairs 50 is plotted against the value of k when using the disclosed pairwise matching method for the top k variant in the following configurations:

- 310 : the backward matching S20 is applied in the plurality of candidate forward matched pairs 21 with no ratio test;
- 311 : a brute force backward matching is applied from the second set of features 20 with no ratio test. It shows the ideal set of matched pairs (around 5900 pairs), when no ratio test is performed;
- 320 : the backward matching S20 is applied in the plurality of candidate forward matched pairs 21 with a ratio test, wherein the ratio value is 1.3;
- 321 : a brute force backward matching is applied from the second set of features 20 with a ratio test, wherein the ratio value is 1.3. It shows the ideal set of matched pairs (around 1900 pairs), when a ratio test (value 1.3) is performed.

It can be seen that the plot 310 (top k) converges towards the plot 311 (brute force) pretty quickly with respect to increasing values of k, showing that relatively low values of k allow to determine a set of matched pairs with a high accuracy compared to the brute force approach. For example it determines around 6000 matched pairs for a value of k=6. This means that the disclosed pairwise matching provides a high accuracy of results for relatively low values of k. In other words significant computation resource reductions can be expected with a very low degradation of the accuracy. Values of k greater than 2, and for instance below k=5 or k=6 are a good tradeoff for the backward matching S20 in the plurality of candidate matched pairs 21. Similarly, when a ratio test is added in the backward matching the plot 320 converges towards the plot 321 even faster.

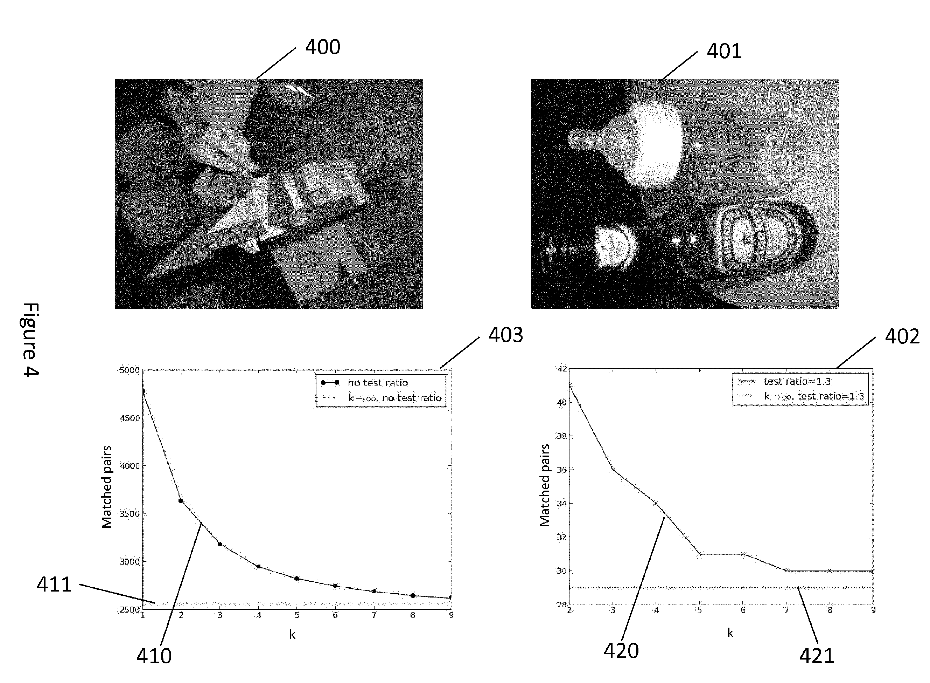

**Figure 4** illustrates a benchmark of the benefit of the pairwise matching "top k" variant method between two images 400 and 401 in case of a *negative* matching. Indeed, the two images 400 and 401 are called *negative* matching as they are two different images of very different scenes and are expected to be considered as different by a content based retrieval system. One image 400 comprises eight thousand features and the other image 401 comprises twelve thousand features. A diagram 402 shows a set of plots 402, 403 where the number of matched pairs 50 are plotted against the value of k when using the disclosed pairwise matching method for the top k variant in the following configurations:

- 410 : the backward matching S20 is applied in the plurality of candidate forward matched pairs 21 with no ratio test;
- 411 : a brute force backward matching is applied from the second set of features 20 with no ratio test; It shows the ideal set of matched pairs (around 2500 pairs), when no ratio test is performed
- 420 : the backward matching S20 is applied in the plurality of candidate forward matched pairs 21 with a ratio test, wherein the ratio value is 1.3;
- 421 : a brute force backward matching is applied from the second set of features 20 with a ratio test, wherein the ratio value is 1.3. It shows the ideal set of matched pairs (29 pairs), when a ratio test (value 1.3) is performed.

It can be seen that the plots 410 and 420 (top k) converge respectively towards the plots 411 and 421 (brute force) pretty quickly with respect to increasing values of k. Here also, a value of greater than 2 and below k = 5 or k=6 is a good tradeoff between computing efficiency and result accuracy for the backward matching S20 in the plurality of candidate matched pairs 21.

The benchmarks illustrated in figures 3 and 4 for both positive and negative matches illustrate that the disclosed pairwise matching method reaches good performances (i.e. computing efficiency and results accuracy) for its top k variant and for relatively low values of k (i.e. around five or six). It should be noted that the computation efficiency gains are significant : indeed the pairwise matching method allows to reduce the number of computations from around ten thousand in the case of a brute force approach to only 5 or 6 candidate, providing is a drastic computation resource reduction.

**Claims**

1. A method for pairwise matching a first set (10) of features to a second set (20) of features, comprising:

   - a forward matching (S10) said first set (10) of features to said second set (20) of features resulting in forward matched pairs (30) wherein said forward matched pair comprises a first feature $A_i$ in said first set (10) of features and a forward matched feature $B_j$ in said second set (20) of features;

   **characterized in that**:

   - said forward matching (S10) further comprises selecting a plurality of candidate forward matched pairs (21); and
   - said pairwise matching method further comprises:

      - applying a backward matching (S20) in said plurality of candidate forward matched pairs (21) resulting in backward matched pairs (40);
      - obtaining (S30) matched pairs (50) by selecting the pairs belonging to both forward matched pairs (30) and backward matched pairs (40).

2. The method according to claim 1, wherein :

   - a feature is further **characterized by** a descriptor, comprising a plurality of values, representing said feature in a descriptor space;
   - said forward matched pair is obtained by selecting the forward matched feature $B_j$ in said second set of features, as the feature with the smallest distance in said descriptor space, to said first feature $A_i$ in said forward matched pair;
   - said backward matched pair comprising a second feature $B_p$ in said second set (20) of features and a backward matched feature Aq in said first set (10) of features, is obtained by selecting the backward matched feature Aq having the smallest distance in said descriptor space to said second feature $B_p$ in said backward matched pair, among other candidate forward matched pairs having the same said second feature $B_p$.

3. The method according to any of claims 1 or 2, further comprising storing distances between the features of said first set (10) of features and the features of said second set (20) of features, wherein said distances are obtained in said descriptor space during said forward matching (S10).

4. The method according to any of claims 1 to 3, wherein a candidate forward matched pair of said plurality of candidate forward matched pairs (21) comprising a first candidate feature $A_{ci}$ in said first set (10) of features, and a candidate forward matched feature $B_{cj}$ in said second set (20) of features, is further selected when the distance between said candidate forward matched feature $B_{cj}$ and said first candidate feature $A_{ci}$ in said descriptor space belongs to the k smallest distances among the distances between said first candidate feature $A_{ci}$ and any feature $B_j$ of said second set (20) in said descriptor space, where k is an integer greater than two and smaller than six.

5. The method according to any of claims 1 to 4, wherein a candidate forward matched pair of said plurality of candidate forward matched pairs (21) comprising a first candidate feature $A_{ci}$ in said first set (10) of features, and a candidate forward matched feature $B_{cj}$ in said second set (20) of features, is further selected when the distance between said candidate forward matched feature $B_{cj}$ and said first candidate feature $A_{ci}$ in said descriptor space is smaller than a first value.

6. The method according to any of claims 1 to 5, wherein obtaining matched pairs further comprises selecting a backward matched pair in the case where the ratio between the distance, in said descriptor space, of its backward matched feature to its first feature and the distance of its second best backward matched feature to its first feature, is smaller than a second value.

7. A device (200), for pairwise matching a first set (10) of features to a second set (20) of features, said device (1) comprising a processor (201) configured to:

- forward match said first set (10) of features to said second set (20) of features resulting in forward matched pairs (30) wherein said forward matched pair comprises a first feature $A_i$ in said first set (10) of features and a forward matched feature $B_j$ in said second set (20) of features;

**characterized in that**:

- said forward match further comprises select a plurality of candidate forward matched pairs (21); and
- said processor (201) is further configured to

- apply a backward matching in said plurality of candidate forward matched pairs (21) resulting in backward matched pairs (40);
- obtain matched pairs (50) by selecting the pairs belonging to both forward matched pairs (30) and backward matched pairs (40).

8. The device according to claim 7, wherein :

- a feature is further **characterized by** a descriptor, comprising a plurality of values, representing said feature in a descriptor space;
- said forward matched pair is obtained by selecting the forward matched feature $B_j$ in said second set of features, as the feature with the smallest distance in said descriptor space, to said first feature $A_i$ in said forward matched pair;
- said backward matched pair comprising a second feature $B_p$ in said second set (20) of features and a backward matched feature Aq in said first set (10) of features, is obtained by selecting the backward matched feature Aq having the smallest distance in said descriptor space to said second feature $B_p$ in said backward matched pair, among other candidate forward matched pairs having the same said second feature $B_p$.

9. The device according to any of claims 7 or 8, wherein a candidate forward matched pair of said plurality of candidate forward matched pairs (21) comprising a first candidate feature $A_{ci}$ in said first set (10) of features, and a candidate forward matched feature $B_{cj}$ in said second set (20) of features, is further selected when the distance between said candidate forward matched feature $B_{cj}$ and said first candidate feature $A_{ci}$ in said descriptor space belongs to the k smallest distances among the distances between said first candidate feature $A_{ci}$ and any feature $B_j$ of said second set (20) in said descriptor space, where k is an integer greater than two and smaller than six).

10. The device according to any of claims 7 to 9, wherein a candidate forward matched pair of said plurality of candidate forward matched pairs comprising a first candidate feature $A_{ci}$ in said first set (10) of features, and a candidate forward matched feature $B_{cj}$ in said second set (20) of features, is further selected when the distance between said candidate forward matched feature $B_{cj}$ and said first candidate feature $A_{ci}$ in said descriptor space is smaller than a first value.

11. The device according to any of claims 7 to 10, wherein said processor (201) configured to obtain matched pairs is further configured to select a backward matched pair in the case where the ratio between the distance, in said descriptor space, of its backward matched feature to its first feature and the distance of its second best backward matched feature to its first feature, is smaller than a second value.

12. A computer program for pairwise matching a first set (10) of features to a second set (20) of features, said computer program comprising program code instructions executable by a processor for:

- forward matching said first set (10) of features to said second set (20) of features resulting in forward matched pairs (30) wherein said forward matched pair comprises a first feature $A_i$ in said first set (10) of features and a forward matched feature $B_j$ in said second set (20) of features, wherein said forward matching further comprises selecting a plurality of candidate forward matched pairs (21);
- applying a backward matching from said plurality of candidate forward matched pairs (21) resulting in backward matched pairs (40);
- obtaining matched pairs (50) by selecting the pairs belonging to both forward matched pairs (30) and backward matched pairs (40).

13. A computer program product for pairwise matching a first set (10) of features to a second set (20) of features, said computer program product being stored on a non-transitory computer readable medium, and comprising program code instructions executable by a processor for:

- forward matching said first set (10) of features to said second set (20) of features resulting in forward matched pairs (30) wherein said forward matched pair comprises a first feature $A_i$ in said first set (10) of features and a forward matched feature $B_j$ in said second set (20) of features, wherein said forward matching further comprises selecting a plurality of candidate forward matched pairs (21);
- applying a backward matching from said plurality of candidate forward matched pairs (21) resulting in backward matched pairs (40);
- obtaining matched pairs (50) by selecting the pairs belonging to both forward matched pairs (30) and backward matched pairs (40).

Figure 1

Figure 2

Figure 3

Figure 4

Europäisches
Patentamt

European
Patent Office

Office européen
des brevets

# EUROPEAN SEARCH REPORT

Application Number

EP 15 30 5747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHONG-WAH NGO WAN-LEI ZHAO: "Fast Tracking of Near-Duplicate Keyframes in BroadcastDomain with Transitivity Propagation", ACM MM'06, 23 October 2006 (2006-10-23), XP040051271, * sect.4 * | 1-13 | INV. G06K9/62 G06F17/30 |
| X | CAO QIONG ET AL: "Region-Based Near-Duplicate Image Retrieval with Geometric Consistency", 2013 2ND IAPR ASIAN CONFERENCE ON PATTERN RECOGNITION, IEEE, 5 November 2013 (2013-11-05), pages 315-318, XP032581765, DOI: 10.1109/ACPR.2013.131 [retrieved on 2014-03-25] * sect.II.B.1 * | 1-13 | |
| X | ALI CEVAHIR ET AL: "GPU-Enabled High Performance Online Visual Search with High Accuracy", MULTIMEDIA (ISM), 2012 IEEE INTERNATIONAL SYMPOSIUM ON, IEEE, 10 December 2012 (2012-12-10), pages 413-420, XP032323173, DOI: 10.1109/ISM.2012.85 ISBN: 978-1-4673-4370-1 * sect.III.A and B * | 1-13 | TECHNICAL FIELDS SEARCHED (IPC) G06K G06F |

The present search report has been drawn up for all claims

| Place of search | Date of completion of the search | Examiner |
|---|---|---|
| The Hague | 3 November 2015 | Darolti, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)